# EUROPEAN PATENT APPLICATION

(11) **EP 4 711 077 A1**
(43) Date of publication of application: **18.03.2026**
(21) Application number: 24839483.5
(22) Date of filing: 24.06.2024
(51) Int. Cl.: B23Q 17/00, B23Q 11/00, G01B 5/00

(54) **CALIBRATION DEVICE, CALIBRATION METHOD, AND MACHINE TOOL**

(30) Priority: 11.07.2023 JP 2023113977
(71) Applicant: Makino Milling Machine Co., Ltd., Tokyo 152-8578 (JP)
(72) Inventor: HUANG, Suisheng, Aiko-gun, Kanagawa 243-0303 (JP); NAKAMURA, Kazato, Aiko-gun, Kanagawa 243-0303 (JP); TAKAHASHI, Keita, Aiko-gun, Kanagawa 243-0303 (JP)
(74) Representative: Withers & Rogers
(86) International application number: PCT/JP2024/022733
(87) International publication number: WO 2025/013587

(57) **Abstract**

A calibration device (10) comprises a shaft part (14) which can be advanced from the calibration device (10) along an axial direction, an outer cylinder (12) for supporting the shaft part (14) therein, a coil spring (24) which is arranged in an interior of the outer cylinder (12) for biasing the shaft part (14) toward a direction of advancement, a temporary locking mechanism (12a, 12b, 15) for holding the shaft part (14) in a position where it is pressed against a biasing force of the coil spring (24), an affixation part (16) which is arranged in the outer cylinder (12) and which can affix the shaft part (14) to the outer cylinder (12), an XY calibration part (26) formed along an outer peripheral surface of the shaft part (14), and a Z calibration part (28) which is formed on a tip of the shaft part (14) and which has a plane orthogonal to an axial direction of the shaft part (14).

## Description

### FIELD

The present invention relates to a calibration device, a calibration method, and a machine tool.

### BACKGROUND

To perform machining accurately, machine tools require position information, i.e., coordinates, of a workpiece serving as the machining target. Position information is acquired by manual measurement by an operator after the operator attaches the workpiece to the machine tool at the machining site, or by measurement using a measuring device comprising sensors attached to the machine tool. Since such measuring device is a measurement system including sensors, recognition of measurement errors using a reference gauge or the like and calibration of the measurement results are necessary. Such calibration operations are referred to as calibration, and the accuracy of the measurement results is strongly dependent on the accuracy of the calibration.

Patent Literature 1 discloses a calibration device for a machine tool, comprising a base which is attachable to a machine tool and a spherical calibration artifact. However, the coordinate origin in the up-down directions, i.e., the Z-axis direction, must be manually acquired using a reference tool and a gauge block. Specifically, the operator must manually lower the tool until the gauge block is interposed between the reference tool and the sphere, and the calibration process is cumbersome even when a calibration device is used. Furthermore, calibration of the horizontal direction, i.e., the X-axis direction and Y-axis direction coordinates, and the Z-axis direction coordinate, must be performed separately. Thus, the time and labor required for calibration are increased. Furthermore, manual calibration requires skill, resulting in variations in measurement accuracy depending on the skill of the operator, and it is difficult to teach such cumbersome skills to others.

For example, Patent Literature 2 discloses a calibration device for a coordinate positioning machine, comprising a base, a calibration artifact, and a lockable mechanism for attaching the calibration artifact to the base. The lockable mechanism of the calibration device can adopt an unlocked state in which the calibration artifact can be moved relative to the base by application of an external force, and a locked state in which the position of the calibration artifact is locked relative to the base. However, when a bar (reference tool having a known length) held by a spindle of a machine tool is brought into contact with the calibration artifact (calibration sphere) for alignment, the bar may accidentally be moved too far toward the calibration sphere. Thus, the calibration device may be damaged, and a significant load may be exerted on the spindle and machine tool via the bar.

### [CITATION LIST]

### [PATENT LITERATURE]

[PTL 1] Japanese Unexamined PCT Publication (Kohyo) No. 2019-509902
[PTL 2] Japanese Unexamined PCT Publication (Kohyo) No. 2023-519290

### SUMMARY

### [TECHNICAL PROBLEM]

In view of the circumstances described above, an object of the present invention is to provide a highly safe and easy-use calibration device and calibration method, which prevent excessive pressing of a reference tool into a calibration device during calibration, and which suppress decreases in operational efficiency caused by being overly cautious during calibration due to fear of excessive pressing, as well as a machine tool using the same.

### [SOLUTION TO PROBLEM]

According to one aspect of the present invention, there is provided a calibration device for a touch probe used in a machine tool, the calibration device comprising a shaft part which is rod-shaped and which can be advanced from the calibration device along an axial direction, an outer cylinder for supporting the shaft part therein, a biasing part which is arranged in an interior of the outer cylinder for biasing the shaft part toward a direction of advancement, a temporary locking mechanism for holding the shaft part in a position where it is pressed against a biasing force of the biasing part, an affixation part which is arranged in the outer cylinder and which can affix the shaft part to the outer cylinder, an XY calibration part formed along an outer peripheral surface of the shaft part or the outer cylinder, and a Z calibration part which is formed on a tip of the shaft part and which has a plane orthogonal to an axial direction of the shaft part.

Furthermore, according to one aspect of the present invention, there is provided a machine tool to which the calibration device according to an aspect of the present invention can be attached, the machine tool comprising a spindle for attachment of a machining tool, the spindle being capable of attachment of a reference tool and the touch probe in place of the machining tool, a table to which a machining target and the calibration device are attached, and a feed shaft part for moving the spindle and the table relative to each other.

According to another aspect of the present invention, there is provided a method for calibrating a touch probe using the calibration device according to an aspect of the present invention, the method comprising the steps of arranging the calibration device on the machine tool, holding the shaft part in a pressed position by means of the temporary locking mechanism, attaching a reference tool to a spindle of the machine tool and relatively moving the spindle such that a tip of the reference tool is positioned axially above the Z calibration part of the shaft part , releasing the temporary locking mechanism and biasing the shaft part toward the reference tool by means of the biasing part, affixing the shaft part abutting the reference tool with the affixation part, acquiring reference coordinates in the axial direction of the affixed shaft part, attaching the touch probe to the spindle of the machine tool, acquiring reference coordinates in a direction orthogonal to the axial direction of the shaft part, and acquiring calibration values in the axial direction and a direction orthogonal to the axial direction based on the reference coordinates.

### [ADVANTAGEOUS EFFECTS OF INVENTION]

According to one aspect of the present invention, the calibration device comprises a shaft part which can be advanced from the calibration device along an axial direction, a biasing part for biasing the shaft part toward the direction of advancement, a temporary locking mechanism for holding the shaft part in a position where it is pressed against a biasing force of the biasing part, and an affixation part which can affix the shaft part to an outer cylinder. Thus, the shaft part can be biased by the biasing part and affixed in the advanced position, whereby the shaft part can be positioned easily and quickly in the axial direction. Furthermore, the temporary locking mechanism can temporarily affix the shaft part in the pressed position. Thus, to set the position for affixation of the shaft part, the tip of the reference tool attached to the spindle of the machine tool simply needs to be moved close to the shaft part of the calibration device. The temporary fixation is released, and the shaft part biased by the biasing part is brought into contact with the tip of the reference tool attached to the spindle of the machine tool to set the position. As a result, the tip of the reference tool is prevented from colliding with the shaft part and exerting a load on the machine tool. Furthermore, since the delicate task of pushing the shaft part a predetermined amount with the reference tool is eliminated, decreases in operational efficiency can be suppressed and the safety of the machine tool can be secured. The calibration device further comprises an XY calibration part formed along the outer peripheral surface of the shaft part and a Z calibration part which is formed on the tip of the shaft part and which has a plane orthogonal to an axial direction of the shaft part. Thus, alignment in the direction along the shaft part and the direction orthogonal to the shaft part can be easily performed using a single shaft part, i.e., the calibration device. As a result, calibration can be performed easily and with suitable operability, regardless of the skill level of the worker, whereby calibration can be performed regularly without hassle, thereby stabilizing the quality of the machined product, i.e., machining accuracy.

According to the machine tool according to one aspect of the present invention, a calibration device according to one aspect of the present invention can be attached, and a reference tool and a touch probe can be attached to a spindle. Thus, calibration can be performed easily and quickly. Furthermore, the tip of the reference tool attached to the spindle of the machine tool can be prevented or suppressed from colliding with the shaft part and exerting a load on the machine tool, thereby ensuring safety of the machine tool.

According to the calibration method according to one aspect of the present invention, alignment of the shaft part in a direction along the shaft part and in a direction orthogonal to the shaft part can be continuously performed using a single calibration device. As a result, calibration can be performed easily and quickly. Furthermore, the tip of the reference tool attached to the spindle of the machine tool can be prevented or suppressed from colliding with the shaft part and exerting a load on the machine tool, thereby ensuring safety of the machine tool.

### BRIEF DESCRIPTION OF DRAWINGS

FIG. 1 shows a perspective view of a calibration device according to a first embodiment.
FIG. 2 shows a perspective view of a state in which a shaft part of the calibration device is advanced.
FIG. 3A shows a cross-sectional view of the calibration device in a state in which the shaft part is raised taken along line 3-3 of FIG. 1, and FIG. 3B shows a cross-sectional view of the calibration device of FIG. 3A taken along line 3B-3B.
FIG. 3C shows a cross-sectional view of the calibration device in a state in which the shaft part is temporarily affixed in a pressed position taken along line 3-3 of FIG. 1, and FIG. 3D shows a cross-sectional view of the calibration device of FIG. 3C taken along line 3D-3D.
FIG. 3E shows a cross-sectional view of the calibration device in a state in which temporary affixation is released and the shaft part is in contact with a tip part of a reference tool taken along line 3-3 of FIG. 1, and FIG. 3F shows a cross-sectional view of the calibration device of FIG. 3E taken along line 3F-3F.
FIG. 3G shows a cross-sectional view of the calibration device in a state in which the shaft part is affixed taken along line 3-3 of FIG. 1, and FIG. 3H shows a cross-sectional view of the calibration device of FIG. 3G taken along line 3H-3H.
FIG. 4A shows a perspective view of the calibration device from which a cover has been removed.
FIG. 4B is a cross-sectional view of the calibration device in which a cam lever is in an unclamped state taken along line 4-4 of FIG. 1.
FIG. 4C is a cross-sectional view of the calibration device in which the cam lever is in a clamped state taken along line 4-4 of FIG. 1.
FIG. 5A shows a side view of the calibration device, and FIG. 5B shows a bottom view of the calibration device of FIG. 5A.
FIG. 5C shows a side view of the calibration device when attached to a table, and FIG. 5D shows a side view of the calibration device when detached from the table.
FIG. 6 shows a flowchart of calibration of a touch probe.
FIG. 7 shows a side view of a machine tool to which the reference tool and the calibration device are attached.
FIG. 8 shows a plan view of a Z calibration part indicating the relationship between provisional reference coordinates and reference coordinates.
FIG. 9 shows a perspective view detailing a touch probe calibration method.
FIG. 10 is a plan view detailing a method for acquiring reference coordinates in the X-axis direction and the Y-axis direction.
FIGS. 11A and 11B are a plan and a side view schematically showing a state in which a shaft part is clamped by a temporary locking mechanism according to a second embodiment, and are cross-sectional views taken along line 11A-11A and line 11B-11B, respectively.
FIGS. 11C and 11D are a plan and a side view schematically showing a state in which the shaft part is unclamped by the temporary locking mechanism according to the second embodiment, and are cross-sectional views taken along line 11C-11C and line 11D-11D, respectively.

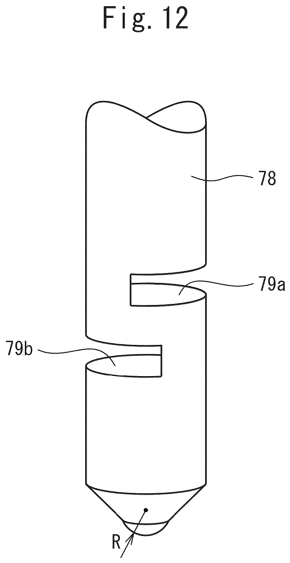

FIG. 12 shows a side view of a modification example of a reference tool.

### DESCRIPTION OF EMBODIMENTS

The calibration device, machine tool, and calibration method according to embodiments will be described below with reference to the attached drawings. Identical or corresponding elements have been assigned the same reference signs, and duplicate description thereof has been omitted. In order to facilitate understanding, the scales of the drawings have been changed in some cases.

### (First Embodiment)

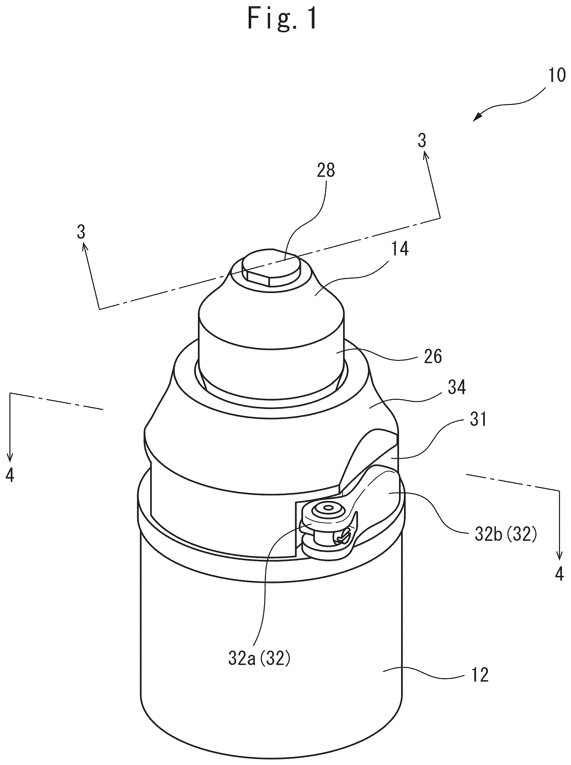

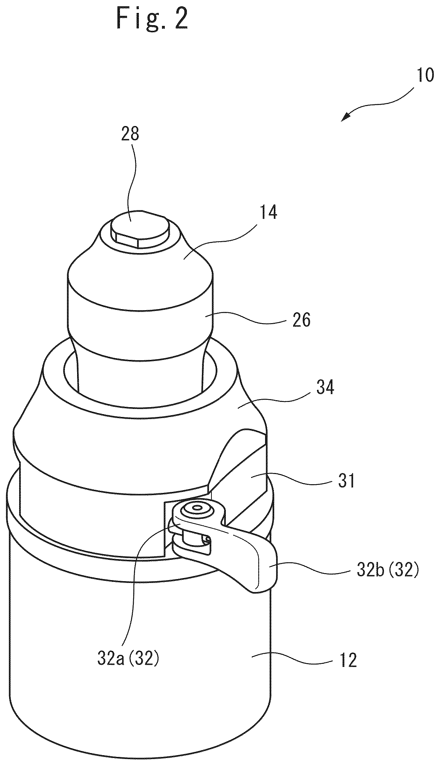

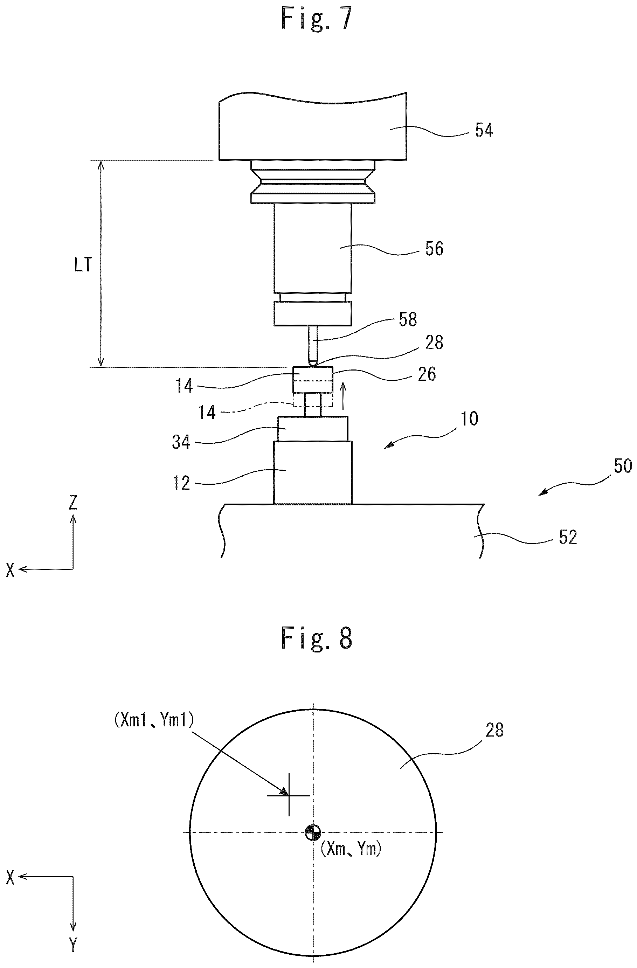

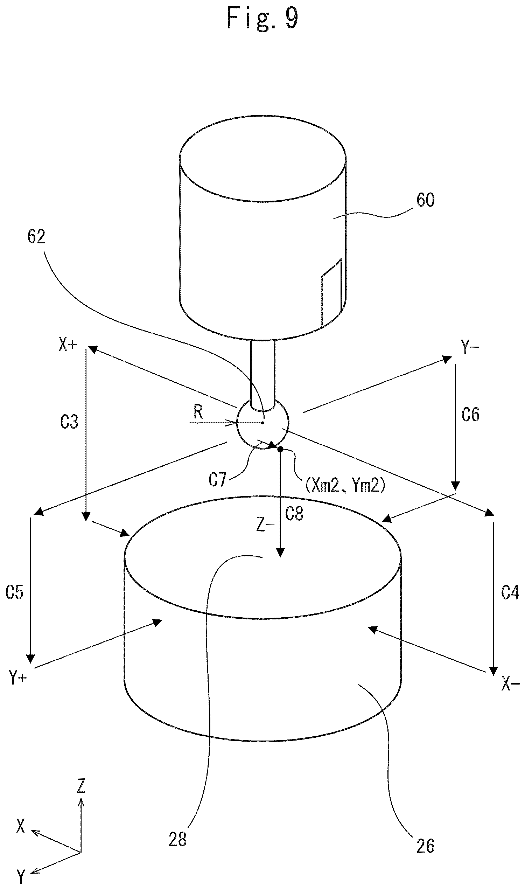

A first embodiment of the present invention will be described below with reference to the attached drawings. FIGS. 1 and 2 show perspective views of a calibration device 10. As shown in FIGS. 7 and 9, the calibration device 10 is used in a machine tool 50 for calibrating the position of a touch probe 60 in order to accurately measure the position of, for example, a workpiece (not illustrated). Thus, the calibration device 10 is attached to a table 52 of the machine tool 50 for attachment of a workpiece (not illustrated) serving as the machining target. In the drawings, arrows indicate the front-rear, left-right, and up-down directions of the machine tool 50 when the machine tool 50 is arranged on a horizontal plane such as the floor of a factory. In the drawings, X indicates the left-right directions (X-axis direction), Y indicates the front-rear directions (Y-axis direction), and Z indicates the up-down directions (Z-axis direction).

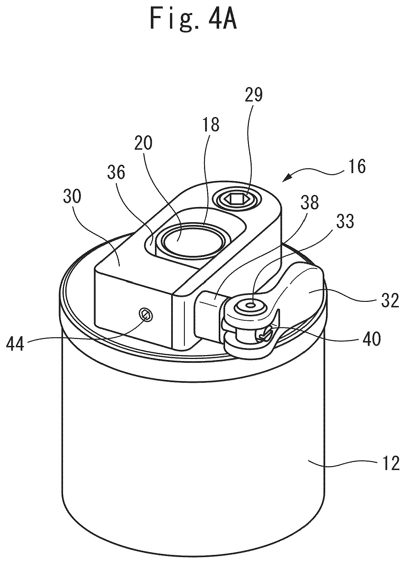

As shown in FIGS. 1 and 2, the calibration device 10 comprises an outer cylinder 12, a shaft part 14, and an affixation part 16 (refer to FIG. 4A). The calibration device 10 is arranged such that the outer cylinder 12 is on an upper surface of the table 52 (refer to FIG. 7) of the machine tool 50, and the rod-shaped metal shaft part 14 advances toward the upper side of the outer cylinder 12. At this time, the affixation part 16 is formed for affixing the position of the advanced shaft part 14.

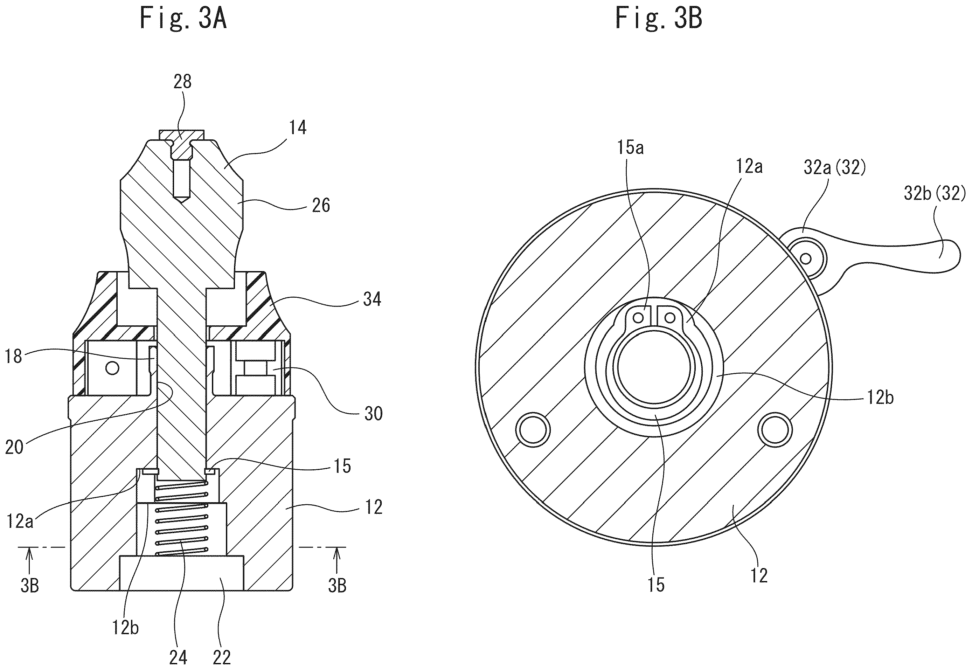

As shown in FIGS. 1 and 3A, the outer cylinder 12 is made of metal, and the outer periphery thereof has a cylindrical shape. A cylindrical thin-wall cylinder 18 for fastening of the shaft part 14 is formed integrally with the outer cylinder 12 at the center of the upper side of the outer cylinder 12. A hole 20 is formed through the center of the thin-wall cylinder 18 and the outer cylinder 12 along the axial direction of the shaft part 14 housed in the outer cylinder 12 and the thin-wall cylinder 18, i.e., the Z-axis direction. The inner diameter of the hole 20 in the thin-wall cylinder 18 and the upper part of the outer cylinder 12 is formed so as to be approximately the same as the outer diameter of the shaft part 14 such that the shaft part 14 can be housed and fastened.

As shown in FIG. 3A, a disk-shaped magnet 22 is arranged on the bottom surface side of the outer cylinder 12 so as to cover the hole 20. Thus, the position of the calibration device 10 arranged on the metal table 52 (refer to FIG. 7) can be stabilized so as to not deviate therefrom. A coil spring 24 serving as a biasing part is arranged between the magnet 22 and the lower end of the shaft part 14 housed in the hole 20. Thus, the shaft part 14 housed in the hole 20 can be biased upward, i.e., toward the reference tool 58 and the touch probe 60 (refer to FIGS. 7 and 9). As a result, the shaft part 14 can abut against the tip of the reference tool 58 arranged above the shaft part 14. Note that the tip of the reference tool 58 is preferably spherical.

An XY calibration part 26 having a cylindrical outer periphery is formed on the upper side of the shaft part 14 housed in the hole 20. The XY calibration part 26 extends further in the radial direction of the shaft part 14 than other parts of the shaft part 14, and is formed so that the central axis thereof is coaxial with the central axis of the shaft part 14.

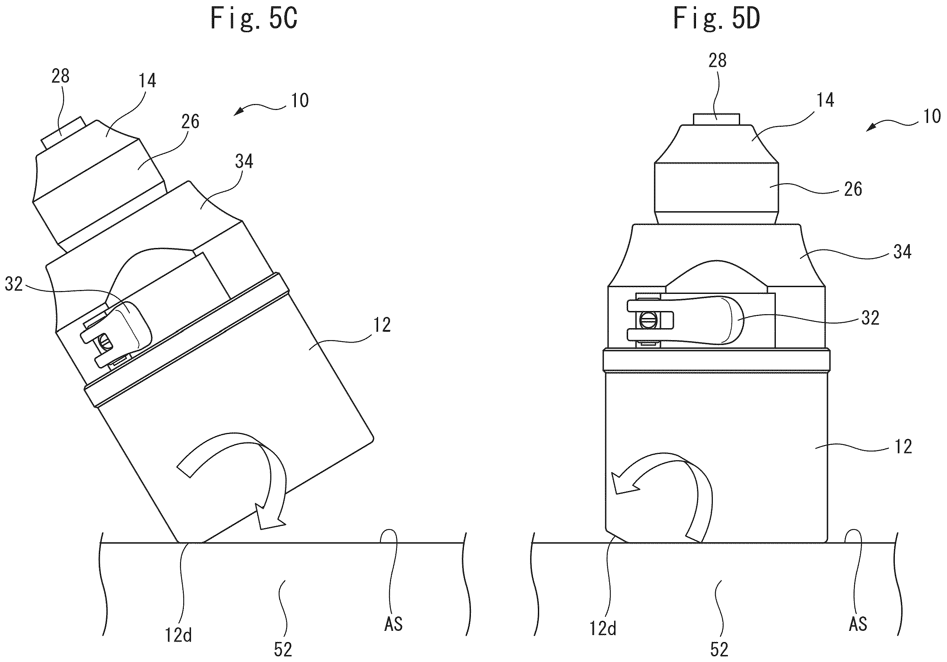

A Z calibration part 28 having a plane orthogonal to the axial direction of the shaft part 14, i.e., parallel to an attachment surface AS (refer to FIG. 5C) of the table 52 to which the calibration device 10 is attached, is formed on the tip of the shaft part 14. Regardless of the X-axis or Y-axis position on the plane of the Z calibration part 28 the reference tool 58 abuts, by measuring with the touch probe 60 the relative difference between the Z-axis position at the X-axis or Y-axis position where the reference tool 58 abuts and the Z-axis position at the central axis position of the XY calibration part 26, the accurate Z-axis position at the central axis position of the XY calibration part 26 on the plane of the Z calibration part 28 can be acquired. Thus, positioning in the X-axis and Y-axis directions when the reference tool 58 abuts can be performed simply and in a short time.

As shown in FIGS. 3A and 3B, a retaining ring 15 which is formed in a ring shape along an outer periphery of the shaft part 14 and which constitutes a temporary locking mechanism is attached to the lower end of the shaft part 14. The retaining ring 15 has a hook part 15a which is a part of the outer periphery thereof extending radially outward, i.e., toward the radially outer side of the shaft part 14. Furthermore, a first step part 12a and a second step part 12b which constitute a temporary locking mechanism are formed in stepped shapes in the lower part of the hole 20 of the outer cylinder 12. Specifically, the first step part 12a is formed concentrically with the hole 20 and has an inner diameter which is greater than the inner diameter of the hole 20. The second step part 12b is formed concentrically with the hole 20 and the first step part 12a below the first step part 12a and has an inner diameter which is greater than the inner diameter of the first step part 12a. Furthermore, a cutout is formed in a part of the second step part 12b so that the hook part 15a can pass therethrough when the shaft part 14, to which the retaining ring 15 is attached, moves upward and downward. Since the retaining ring 15 abuts against the upper end of the first step part 12a, which communicates with the upper side of the hole 20, upward movement of the shaft part 14 is restricted in this position.

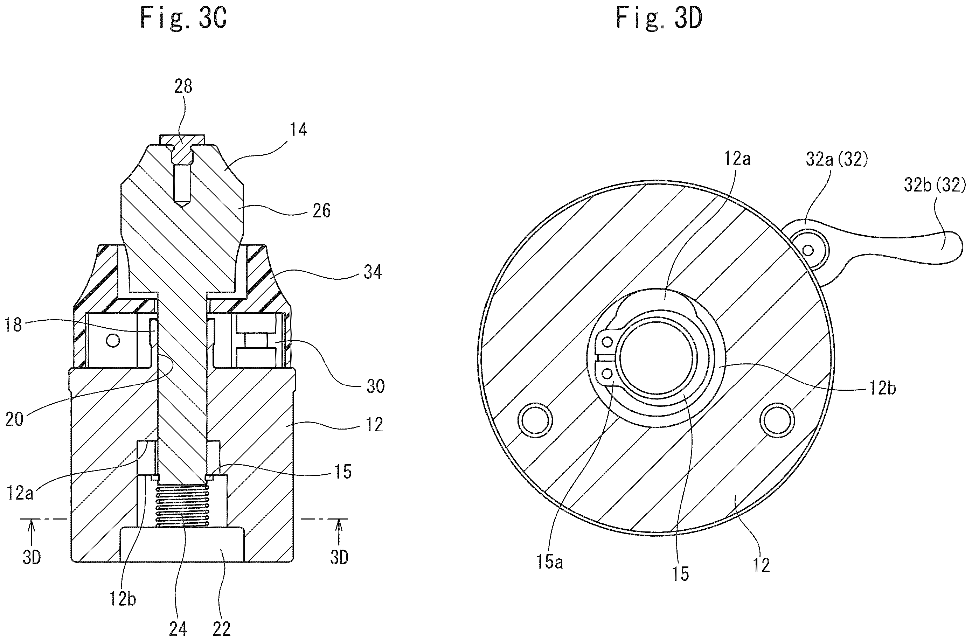

Furthermore, as shown in FIGS. 3C and 3D, when the shaft part 14 is pressed downward to the second step part 12b against the biasing force of the coil spring 24, i.e., the spring force, and the shaft part 14 is rotated to a position where the hook part 15a and the cutout portion of the second step part 12b do not overlap in a bottom view, the hook part 15a of the retaining ring 15 abuts against the second step part 12b, restricting the upward movement of the shaft part 14 at this position. Thus, the shaft part 14 can be temporarily affixed in this position. The hook part 15a is rotated approximately 90 degrees from the cutout portion of the second step part 12b.

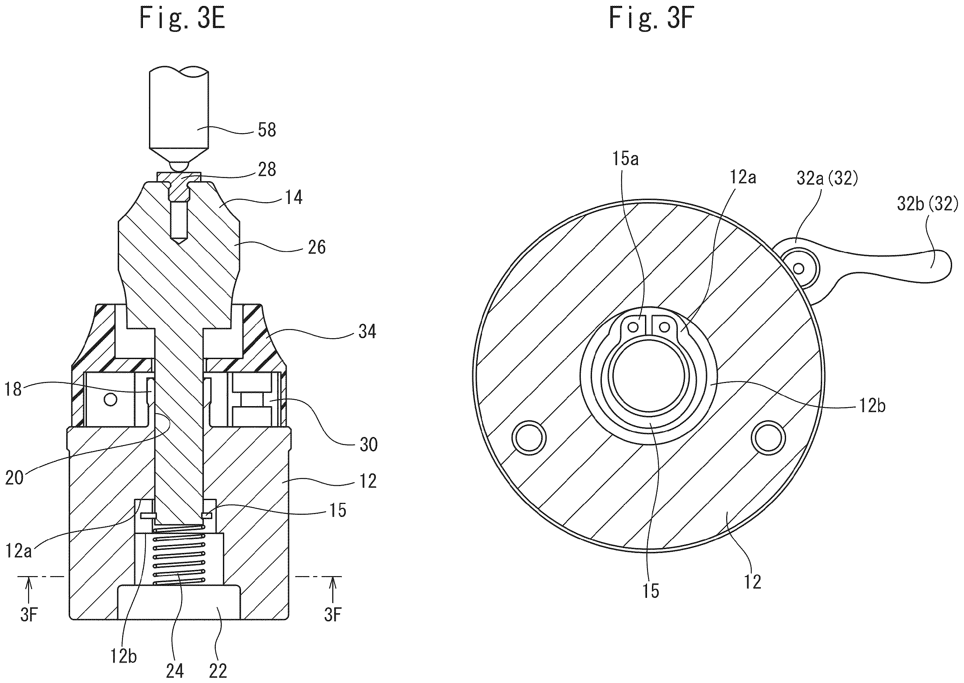

Further, as shown in FIGS. 3E and 3F, when the tip of the reference tool 58 (refer to FIG. 7) is moved a predetermined distance above the temporarily affixed shaft part 14, and the shaft part 14 is then rotated so that the hook part 15a passes through the cutout portion of the second step part 12b, the shaft part 14 rises due to the spring force of the coil spring 24. Thus, the movement of the shaft part 14 enables abutment of the Z calibration part 28 against the tip of the reference tool 58.

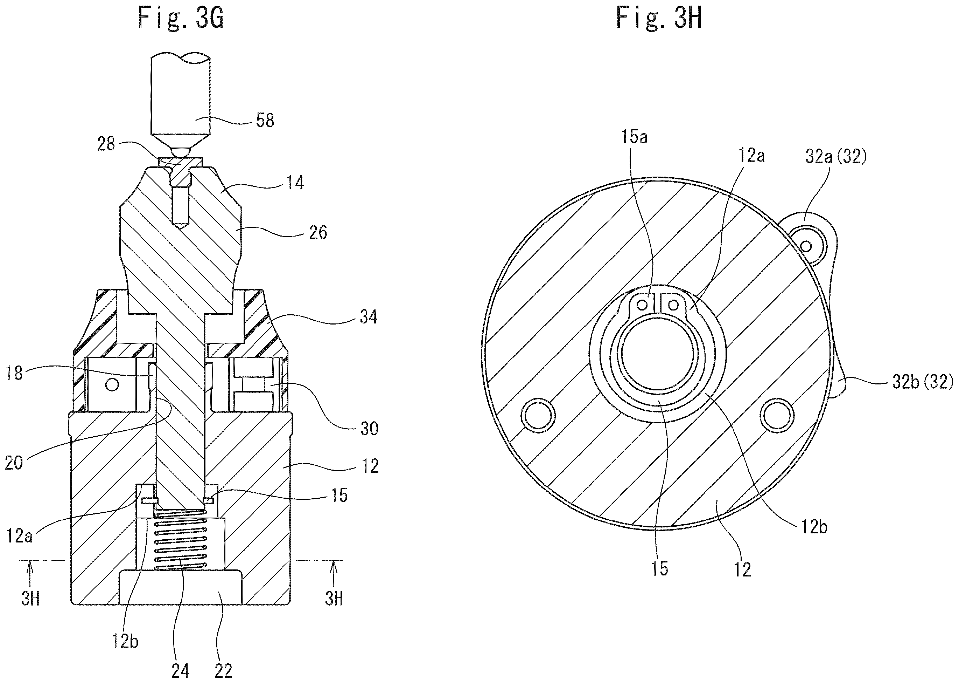

Furthermore, as shown in FIGS. 3G and 3H, in a state in which the Z calibration part 28 abuts against the tip of the reference tool 58, a cam lever 32 can be rotated to clamp the shaft part 14, as described below, thereby fixing the height position of the shaft part 14 in the calibration device 10.

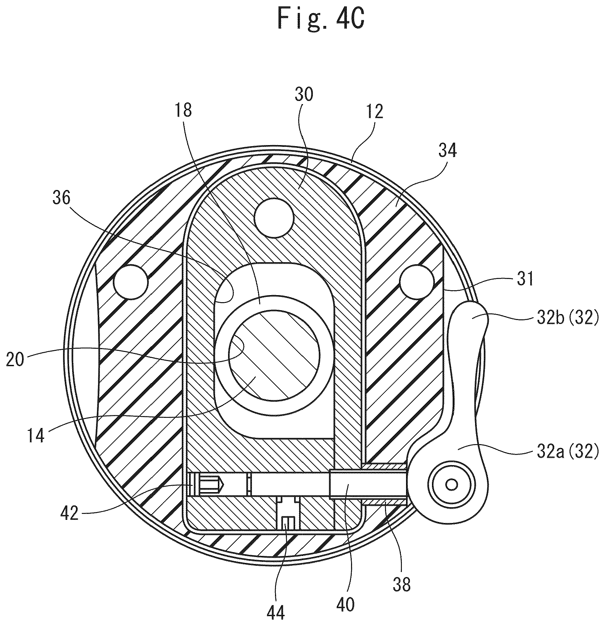

FIG. 4A shows a perspective view of the calibration device 10 in a state in which the shaft part 14 and the cover part 34 are removed. The affixation part 16 (refer to FIG. 4A) formed radially outward of the thin-wall cylinder 18 has a pressing part 30 as a metal clamper for pressing the thin-wall cylinder 18, a metal cam lever 32 for applying pressure to the pressing part 30, a hard resin cover part 34 arranged to cover the outside of the pressing part 30, and an abutment part 31 (refer to FIG. 4C) against which the cam lever 32 abuts. Note that though the cover part 34 is described herein as being composed of a hard resin, it is not limited thereto, and the cover part may be composed of a material other than a hard resin.

As shown in FIGS. 4A to 4C, the pressing part 30 is formed so as to surround, or interpose, the outside of the thin-wall cylinder 18, and has an inner portion 36 the inner width of which is the same as the outer diameter of the thin-wall cylinder 18. One longitudinal end of the pressing part 30 is fastened to the outer cylinder 12 by a bolt 29, and the other longitudinal end has a gap 30a which penetrates to the inner portion 36. A rod-shaped pin 40 is attached to the other longitudinal end of the pressing part 30, and a shaft portion thereof extends through the gap 30a to the interior of the pressing part 30. A collar 38 is attached to the pin 40 exposed from the pressing part 30, and the cam lever 32 is rotatably connected to the end of the pin 40 by a screw 33.

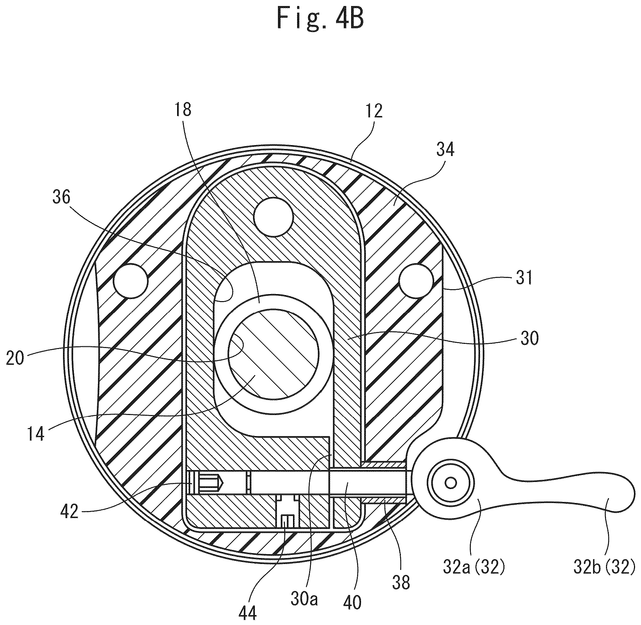

The cam lever 32 is formed so as to be rotatable horizontally about a central axis extending along the Z-axis. The cam lever 32 has a cam-shaped cam part 32a on the central axis side thereof and a lever part 32b extending radially from the cam part 32a (in this case, horizontally) about the central axis. Thus, when the lever part 32b is rotated toward the abutment part 31 from the unclamped state of the shaft part 14 shown in FIG. 4B, the cam part 32a presses the pressing part 30 via the collar 38, elastically deforming to close the gap 30a, and the inner portion 36 uniformly presses the thin-wall cylinder 18 radially inward from both sides as shown in FIG. 4C. As a result, the thin-wall cylinder 18 elastically collapses and tightens the shaft part 14, creating a clamped state in which the shaft part 14 is affixed to the thin-wall cylinder 18 without deviation in position and posture in contact with the reference tool 58. Furthermore, screws 42, 44 are attached to the pressing part 30 for affixing the end of the pin 40 on the pressing part 30 side and the side of the pin 40. Thus, when the cam lever 32 is rotated from the unclamped state to the clamped state, the pressing part 30 can be stably pulled by the lift amount of the cam part 32a, and the thin-wall cylinder 18 and shaft part 14 can be stably clamped.

Furthermore, in the clamped state shown in FIG. 4C, when the lever part 32b is rotated away from the abutment part 31 and assumes the unclamped state shown in FIG. 4B, the collar 38, the pressing part 30, and the thin-wall cylinder 18 are no longer pressed by the cam part 32a. Thus, the thin-wall cylinder 18 releases the shaft part 14, and the shaft part 14 can advance upward due to the spring force of the coil spring 24.

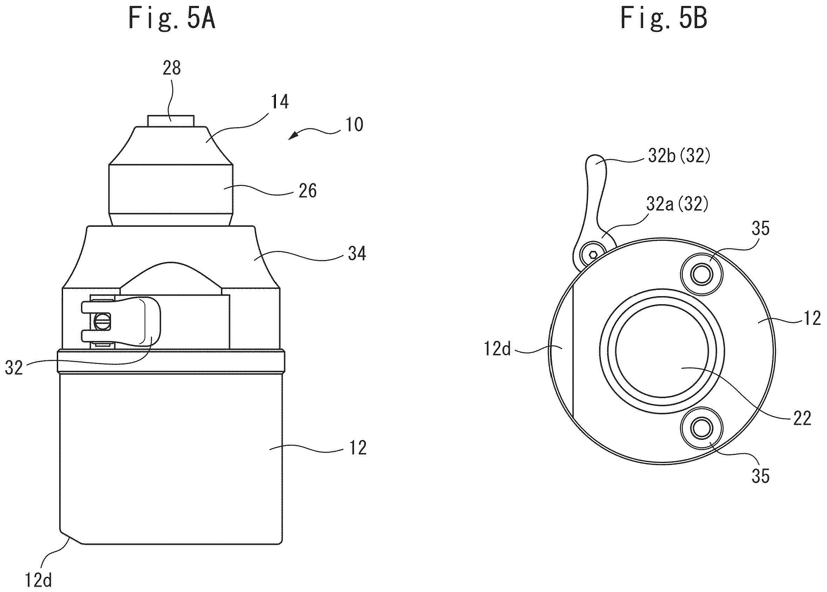

FIGS. 5A and 5B show a side view and a bottom view of the calibration device 10. On the bottom part of the outer cylinder 12, an inclined surface 12d which is inclined radially outward from the bottom surface and toward the outer periphery and upward of the outer cylinder 12 is formed on a part of the radially outer side of the magnet 22 arranged in the center thereof. Note that the bolts 35 are bolts for affixing the cover part 34 to the outer cylinder 12.

FIGS. 5C and 5D show side views of the calibration device 10 when it is attached to and detached from the attachment surface AS of the table 52 (refer to FIG. 7). As shown in FIG. 5C, when attaching the calibration device 10 to the attachment surface AS, the calibration device 10 is tilted so that the inclined surface 12d abuts against the attachment surface AS. From this state, the calibration device 10 is tilted in the direction of the arrow in the drawing, using the inclined surface 12d as a fulcrum, such that the bottom surface of the outer cylinder 12 abuts against the attachment surface AS. Furthermore, as shown in FIG. 5D, when detaching the calibration device 10 from the attachment surface AS, the calibration device 10 is tilted in the direction of the arrow in the drawing, such that the inclined surface 12d abuts against the attachment surface AS, thereby separating the magnet 22 from the attachment surface AS, and the calibration device 10 can be detached from the attachment surface AS without the magnet 22 being in direct contact with the attachment surface AS. Thus, the calibration device 10 can be prevented or suppressed from coming into forceful contact with the attachment surface AS, i.e., from colliding therewith, due to the magnetic force of the magnet 22. Furthermore, since it is not necessary to pull the calibration device 10 up in the direction in which the magnetic force acts, i.e., in the vertical direction, the calibration device 10 can be easily and operably detached from the attachment surface AS. As a result, damage to the attachment surface AS when attaching and detaching the calibration device 10 can be prevented or suppressed. Furthermore, because a typical magnet stand system with a magnetic on/off switch lever is not used, the calibration device 10 can be quickly attached to and detached from the table 52.

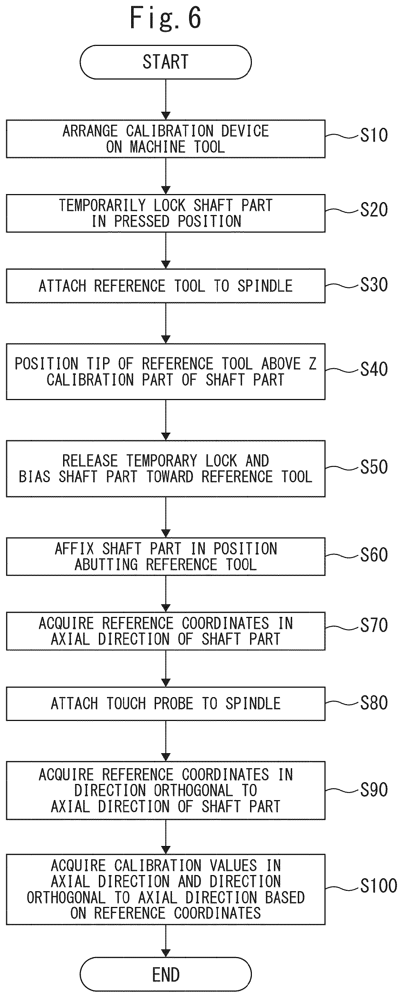

The mode of operation and effects of the calibration device 10, the calibration method, and the machine tool 50 according to the present embodiment will be described below by means of description of the calibration method according to the flowchart shown in FIG. 6.

First, proceeding to step S10, as shown in FIG. 7, the calibration device 10 is placed on the table 52 of the machine tool 50 for performing calibration of the touch probe 60 for measuring the machining target. The calibration device 10 is placed so that the upper surface (plane) of the Z calibration part 28 is parallel to the lower end surface of a spindle 54 for attaching the tool of the machine tool 50, and specifically, so that the plane of the Z calibration part 28 is horizontal.

Next, proceeding to step S20, as shown in FIGS. 3C and 3D, the shaft part 14 is temporarily affixed by pushing it into the outer cylinder 12 and rotating. Further, proceeding to step S30, the reference tool 58 attached to a tool holder 56 having a known length LT is attached to the spindle 54. Proceeding to step S40, the reference tool 58 is positioned. The reference tool 58 is positioned by a feed shaft device (not illustrated) arranged in the machine tool 50 as a feed shaft part for moving the spindle 54 along the X-, Y-, and Z-axis directions, such that the tip of the reference tool 58 (here, the lower end thereof) is positioned predetermined distance above the Z calibration part 28 of the shaft part 14. The predetermined distance may be anywhere within the stroke range between the temporarily affixed position and the raised position of the shaft part 14, and for example, when the stroke is 7 mm, approximately 4 mm can be selected. Since it is not necessary to push the shaft part 14 while the reference tool 58 is in contact with the shaft part 14, collision can be prevented.

When the reference tool 58 is positioned, proceeding to step S50, and ass shown in FIGS. 3E and 3F, the shaft part 14 is rotated to release the temporary affixation, and the spring force biases the shaft part 14 upward. As a result, the Z calibration part 28 can abut against the lower end of the reference tool 58, as shown in FIG. 7. When the Z calibration part 28 has abutted, proceeding to step S60, and as shown in FIGS. 3G and 3H, in a state in which the Z calibration part 28 and the reference tool 58 abut, the cam lever 32 is rotated toward the abutment part 31 to affix the shaft part 14.

As shown in FIG. 8, the position where the tip of the reference tool 58 abuts the plane of the Z calibration part 28 is acquired (step S70) and is set as the reference Z coordinate Zm in the Z-axis direction. Furthermore, the positions where the reference Z coordinate Zm is set in the X- and Y-axis directions are not necessarily the center of the Z calibration part 28, i.e., the reference coordinates (Xm, Ym). The position where the tip of the reference tool 58 abuts the plane of the Z calibration part 28 is measured and set as the temporary reference coordinates (Xm1, Ym1) in the X- and Y-axis directions.

When the reference Z coordinate Zm and the temporary reference coordinates (Xm1, Ym1) have been set, proceeding to step S80, and the touch probe 60 shown in FIG. 7 is attached to the spindle 54 in place of the reference tool 58. Next, proceeding to step S90, a gauge head 62 arranged at the tip of the touch probe 60 is positioned at the temporary reference coordinates (Xm1, Ym1). Further, proceeding to step S100, the X-axis, Y-axis, and Z-axis positions are calibrated using the touch probe 60 attached to the spindle 54 in this manner. The tip of the reference tool 58 may be flat, pointed, spherical, or an actual cutting tool. Microscopically, there is no guarantee that the plane of the Z calibration part 28 at the tip of the shaft part 14 is perpendicular to the axis of the spindle 54 of the machine tool 50, nor is there any guarantee that it is perfectly flat. Thus, a spherical shape which provides point contact is conventionally selected for the tip of the reference tool 58 contacting the Z calibration part 28. However, strictly speaking, it is conceivable that very slight differences will occur between the contact positions of the reference tool 58 and the gauge head 62 with respect to the Z calibration part 28 at the temporary reference coordinates (Xm1, Ym1). To achieve high-precision measurement minimizing this difference to zero, it is preferable that the tip of the reference tool 58 be spherical with a radius R identical to the spherical radius R of the gauge head 62.

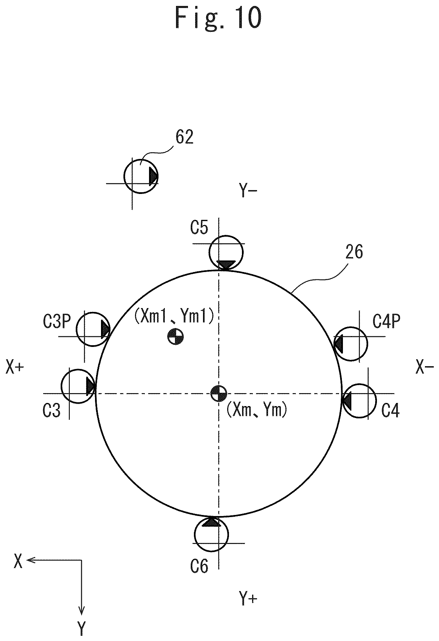

The calibration of the X-axis, Y-axis, and Z-axis positions of steps S90 and S100 will be described in detail. First, the reference coordinates (Xm, Ym) for the X-axis and Y-axis directions are acquired. The touch probe 60 can emit a signal when it comes into contact with the object being measured. The machine tool comprises a controller and a signal receiving device, and can detect when the touch probe 60 has come into contact with the object being measured. Furthermore, the gauge head 62 of the touch probe 60 is controlled so as to always face the same phase relative to the direction of movement when acquiring the reference coordinates (Xm, Ym). As shown in FIG. 10, the machine tool 50 moves the spindle 54 relatively using the feed shaft device, moving the gauge head 62 of the touch probe 60, which is located at the temporary reference coordinates (Xm1, Ym1), in the positive X-axis direction (+X-axis direction) along path C3 (refer to FIG. 9). The X coordinate is measured at position C3P where the moved gauge head 62 contacts the XY calibration part 26. The gauge head 62 of the touch probe 60 is also moved in the negative X-axis direction (-X-axis direction) along path C4 (refer to FIG. 9). The X coordinate is measured at position C4P where the moved gauge head 62 contacts the XY calibration part 26. Since the Y coordinates of positions C3P and C4P are constant at Ym1, the machine tool 50 can calculate the average value of these X coordinates as the first X coordinate at the intermediate position between positions C3P and C4P.

Furthermore, the machine tool 50 relatively moves the spindle 54 using the feed shaft device, and moves the gauge head 62 of the touch probe 60, the X coordinate of which is the first X coordinate, in the positive Y-axis direction (+Y-axis direction) along path C5 (refer to FIG. 9). The Y coordinate is measured at the position where the moved gauge head 62 contacts the XY calibration part 26. The gauge head 62 of the touch probe 60 also moves in the negative Y-axis direction (-Y-axis direction) along path C6 (refer to FIG. 9). The Y coordinate is measured at the position where the moved gauge head 62 contacts the XY calibration part 26. Since the X coordinates at the two locations are constant at the first X coordinate, the machine tool 50 can calculate the average value of these Y coordinates as the Y coordinate at the intermediate position, i.e., reference coordinate Ym.

Further, the machine tool 50 relatively moves the spindle 54 using the feed shaft device, and moves the gauge head 62 of the touch probe 60, the Y coordinate of which is the reference coordinate Ym, in the X-axis positive direction along path C3. The X coordinate is measured at the position where the moved gauge head 62 contacts the XY calibration part 26. The gauge head 62 of the touch probe 60 also moves in the X-axis negative direction along path C4. The X coordinate is measured at the position where the moved gauge head 62 contacts the XY calibration part 26. Since the Y coordinates at the two locations are constant at Ym, the machine tool 50 can calculate the average value of these X coordinates as the X coordinate at the intermediate position, i.e., the reference coordinate Xm. As a result, the gauge head 62 of the touch probe 60 is positioned at the reference coordinates (Xm, Ym).

As shown in FIG. 9, calibration measurement of the X-axis direction position and the Y-axis direction position are performed by the gauge head 62 of the touch probe 60 positioned at the reference coordinates (Xm, Ym). First, the gauge head 62 of the touch probe 60 is positioned in the +X-axis direction, i.e., moved along path C3. Calibration measurement in the +X-axis direction is performed at the position where the moved gauge head 62 contacts the XY calibration part 26, and the calibration values (X and Y coordinates) in the +X-axis direction are acquired. Next, the gauge head 62 of the touch probe 60 is positioned in the negative X-axis direction (-X-axis direction), i.e., moved along path C4. Calibration measurement in the -X-axis direction is performed at the position where the moved gauge head 62 contacts the XY calibration part 26, and the calibration values (X and Y coordinates) in the -X-axis direction are acquired.

The gauge head 62 of the touch probe 60 is positioned in the +Y-axis direction, i.e., moved along path C5. Calibration measurement in the +Y-axis direction is performed at the position where the moved gauge head 62 contacts the XY calibration part 26, and the calibration values (X and Y coordinates) in the positive Y-axis direction are acquired. Furthermore, the gauge head 62 of the touch probe 60 is positioned in the -Y-axis direction, i.e., moved along path C6. Calibration measurement is made in the -Y-axis direction at the position where the moved gauge head 62 contacts the XY calibration part 26, and the calibration values (X and Y coordinates) in the -Y-axis direction are acquired. The acquisition of calibration values in the +X-axis direction, -X-axis direction, +Y-axis direction, and -Y-axis direction is repeated multiple times, and the average values thereof are stored, i.e., recorded, in the machine tool 50 as calibration values.

The machine tool 50 calculates the amount of eccentricity of the gauge head 62 of the touch probe 60 relative to the spindle 54 from the calibration values in the +X-axis direction, -X-axis direction, +Y-axis direction, and -Y-axis direction, and then positions it from the reference coordinates (Xm, Ym) to reference coordinates (Xm2, Ym2) accounting for the eccentricity (C7 in the drawing). The gauge head 62 of the touch probe 60, which has been positioned at the reference coordinates (Xm2, Ym2) accounting for the eccentricity, is then further positioned in the negative Z-axis direction (-Z-axis direction), i.e., moved along path C8. Calibration measurement in the -Z-axis direction is performed at the position where the moved gauge head 62 comes into contact with the Z calibration part 28, and the calibration value (Z coordinate) in the negative Z-axis direction is acquired. This process is repeated multiple times, and the average value thereof is recorded in the machine tool 50 as the calibration value.

According to the calibration device 10, the calibration method, and the machine tool 50 of the present embodiment, the shaft part 14 on which the Z calibration part 28 is formed can be advanced along the Z-axis direction from the outer cylinder 12 by the coil spring 24, and the shaft part 14 can be affixed at the advanced position, i.e., at the position where the tip of the reference tool 58 abuts against the Z calibration part 28, by the affixation part 16. As a result, the Z-axial position of the reference tool 58 can easily be aligned. Furthermore, in order to calibrate the touch probe 60, it is necessary to acquire reference coordinates for the X-axis, Y-axis, and Z-axis directions. However, with existing means, it is necessary to manually move the reference tool, the tool length LT of which is known, gradually closer in units of several µm, while inserting and removing the gauge block to confirm contact. As a result, alignment is extremely time-consuming, and also poses a risk of collision between the reference tool and the gauge block due to incorrect operation. However, in this case, the reference tool 58 need only be brought close to the Z calibration part 28 to a predetermined position before aligning the position in the Z-axis direction, and the position of the Z calibration part can be aligned safely and with suitable operability.

Furthermore, according to the calibration device 10, the calibration method, and the machine tool 50 according to the present embodiment, the shaft part 14 can be temporarily locked in a pressed position by the temporary locking mechanisms 12a, 12b, 15. Thus, to set the position at which the shaft part 14 is affixed, the reference tool 58 of the machine tool 50 need only be moved close to the shaft part 14 of the calibration device 10, and the position can be set by releasing the temporary lock and bringing the shaft part 14 biased by the coil spring 24 into contact with the reference tool 58 of the machine tool 50. As a result, the reference tool 58 can be prevented or suppressed from excessively pressing the shaft part 14 and applying a load to the machine tool 50, thereby ensuring the safety of the machine tool 50.

Furthermore, according to the calibration device 10, the calibration method, and the machine tool 50 of the present embodiment, the calibration device 10 comprises an XY calibration part 26 formed along the outer peripheral surface of the shaft part 14, and a Z calibration part 28 formed at the tip of the shaft part 14 and having a plane perpendicular to the Z-axis direction. Thus, alignment in the X-axis direction, Y-axis direction, and Z-axis direction can be easily performed using a single shaft part 14, i.e., the calibration device 10. As a result, calibration can be performed independently of the skill level of the operator. Furthermore, since such simple calibration can be performed periodically, the quality of the machined product, i.e., the machining accuracy, can be stabilized.

According to the machine tool 50 according to the present embodiment, the calibration device 10 can be attached to the machine tool 50, and the reference tool 58 and the touch probe 60 can be attached to the spindle 54 of the machine tool 50. Thus, calibration can be performed easily and quickly with suitable operability.

According to the calibration method of the present embodiment, alignment of the shaft part 14 in the Z-axis direction along the axial direction and in the X-axis direction and Y-axis direction orthogonal to the axial direction can be performed continuously using a single calibration device 10. As a result, calibration can be performed easily, conveniently, and in a short time with suitable operability.

As described above, the calibration device 10, the calibration method, and the machine tool 50 according to the present embodiment can easily calibrate the touch probe 60 for measuring a machining target.

### (Second Embodiment)

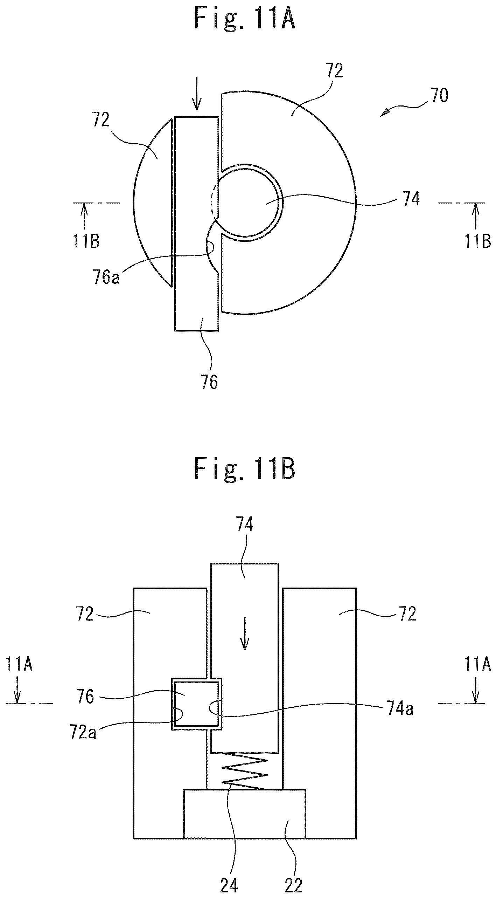

A calibration device 70 according to a second embodiment will be described below using FIGS. 11A to 11D. Elements identical or corresponding to those of the first embodiment have been assigned the same reference signs, and duplicate descriptions thereof have been omitted.

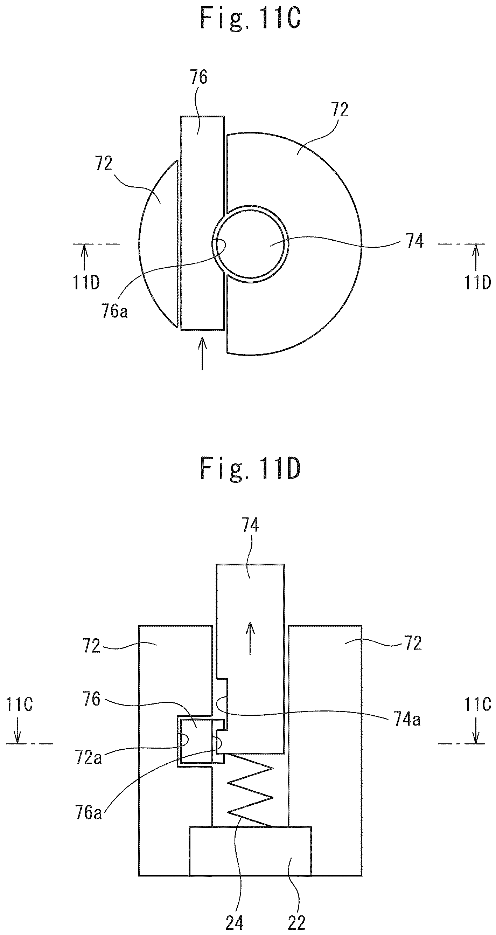

FIGS. 11A to 11D show a schematic plan view and a side view of the calibration device 70 comprising temporary locking mechanisms 74a, 76. As shown in FIGS. 11A and 11B, an outer cylinder 72 of the calibration device 70 has a rectangular groove 72a formed therethrough in the horizontal direction, and a rectangular column-shaped locking shaft 76 is slidably arranged in the rectangular groove 72a. A recess 74a conforming to the outer periphery of the locking shaft 76 is formed on the lower side of a shaft part 74. Thus, as shown in FIG. 11B, the shaft part 74 is pushed downward to a position where the recess 74a and the rectangular groove 72a face each other. In this state, as shown in FIG. 11A, the locking shaft 76 is inserted into the rectangular groove 72a and the recess 74a, whereby the locking shaft 76 and the recess 74a engage with each other, thereby locking, i.e., temporarily fastening, the shaft part 74. Furthermore, as shown in FIG. 11C, when the locking shaft 76 is pushed out of the rectangular groove 72a and an arc-shaped relief part 76a faces the shaft part 74, the engagement between the locking shaft 76 and the shaft part 74A is released, allowing the temporary fastening to be released, and the disengaged shaft part 74 can be lifted by the spring force of the coil spring 24 as shown in FIG. 11D.

According to the calibration device 70 of the present embodiment, the shaft part 74 can be temporarily locked in a pressed position by the temporary locking mechanisms 74a, 76. Thus, to set the position for fixing the shaft part 74, the reference tool 58 of the machine tool 50 need only be moved close to the shaft part 74 of the calibration device 10, and the position can be set by releasing the temporary locking and bringing the shaft part 74 biased by the coil spring 24 into contact with the reference tool 58 of the machine tool 50. As a result, the reference tool 58 can be prevented or suppressed from excessively pressing the shaft part 74 and applying a load to the machine tool 50, thereby ensuring the safety of the machine tool 50.

### (Modification Examples)

Below, modification examples of the machine tool 50 according to the first embodiment and the second embodiment will be described. Elements identical or corresponding to those of the first embodiment and the second embodiment have been assigned the same reference signs, and duplicate descriptions thereof have been omitted.

A reference tool 78 of the machine tool 50 according to the present modification example has a fuse structure comprising one or more notches 79a, 79b cut out along the radial direction to reduce the rigidity of the reference tool 78. Thus, if the reference tool 78 accidentally excessively pushes the shaft part 14, 74 when moving the reference tool 78 toward the shaft part 14, 74 of the calibration device 10, 70, the reference tool 78 can break so as to prevent or suppress transmission of the load acting on the reference tool 78 to the reference tool 78. As a result, the reference tool 78 can be prevented or suppressed from excessively pushing the shaft part 14, 74 and applying a load to the machine tool 50, thereby ensuring the safety of the machine tool 50.

Note that though the affixation part 16 has been described as comprising the pressing part 30, the cam lever 32, the cover part 34, and the abutment part 31, it is not limited thereto. For example, the affixation part may be configured so as to comprise a thin-wall cylinder surrounding the outer periphery of the shaft part, a cam lever part which, when rotated, deforms and affixes the thin-wall cylinder by contacting the cam part, and an abutment part against which the cam lever part abuts when rotated in the direction of fixing the shaft part. The shaft part can be affixed by simply rotating the cam lever part, and the abutment part can provide the effect of easily managing torque. Alternatively, the shaft part may be affixed by a round threaded shaft clamp or the like arranged on the outer periphery of the fastening part.

Furthermore, though the XY calibration part 26 has been described as being formed on the outer periphery of the shaft part 14, it is not limited thereto, and it may be formed on the outer periphery of the outer cylinder. When the XY calibration part is formed on the outer periphery of the outer cylinder, the positional relationship between the XY calibration part and the Z calibration part changes in accordance with advancement of the shaft part, and this amount of change must be corrected. However, in the manner of the case in which the XY calibration part is formed on the outer periphery of the shaft part, alignment of the X-axis direction, Y-axis direction, and Z-axis direction can be easily performed using a single calibration device.

Furthermore, though the outer cylinder 12 has been described as being affixed to the metal table 52 by the magnet 22, it is not limited thereto, and the outer cylinder 12 may be detachably arranged at any position on the machine tool by means of bolting or the like, or may be permanently affixed at a predetermined position on the machine tool. When the outer cylinder 12 is detachably arranged, it can be stored outside the machine tool when not in use, and is therefore not affected by swarf or coolant. Furthermore, when the outer cylinder 12 is detachable, it can be used with a plurality of machine tools.

Furthermore, arranging the calibration device on the machine tool and affixing the shaft part abutting against the reference tool with the affixation part may be performed using a manipulator, and attaching the reference tool to the spindle of the machine tool and attaching the touch probe to the spindle of the machine tool may be performed using a tool changer. Calibration can be performed automatically by the manipulator without operator intervention. The machine tool may also comprise a temporary reference coordinates determination part for determining the temporary reference coordinates Xm1 and Ym1 based on coordinate information of the manipulator when the calibration device is arranged on the machine tool, and an imaging device for confirming abutment of the reference tool and the shaft part before affixation of the shaft part. The machine tool controller may control the machine tool to perform calibration at predetermined intervals.

Though the embodiments of the calibration device 10, 70, the calibration method, and the machine tool 50 have been described above, the present invention is not limited to the above embodiments. For example, instead of a vertical machine tool with a vertical spindle, a horizontal machine tool with a horizontal spindle may be used. In this case, the calibration device is attached to the vertical surface of the table so that the shaft part is horizontal. In addition to the foregoing, a person skilled in the art would understand that various modifications of the embodiments described above can be made.

### REFERENCE SIGNS LIST

- 10: calibration device
- 12: outer cylinder
- 12a: first step part (temporary locking mechanism)
- 12b: second step part (temporary locking mechanism)
- 12d: inclined surface
- 14: shaft part
- 15: retaining ring (temporary locking mechanism)
- 16: affixation part
- 18: thin-wall cylinder
- 22: magnet
- 24: coil spring (biasing part)
- 26: XY calibration part
- 28: Z calibration part
- 30: pressing part (clamper)
- 32: cam lever
- 50: machine tool
- 52: table
- 54: spindle
- 58: reference tool
- 60: touch probe

## Claims

1. A calibration device for a touch probe used in a machine tool, the calibration device comprising:
a shaft part which is rod-shaped and which can be advanced from the calibration device along an axial direction,
an outer cylinder for supporting the shaft part therein,
a biasing part which is arranged in an interior of the outer cylinder for biasing the shaft part toward a direction of advancement,
a temporary locking mechanism for holding the shaft part in a position where it is pressed against a biasing force of the biasing part,
an affixation part which is arranged in the outer cylinder and which can affix the shaft part to the outer cylinder,
an XY calibration part formed along an outer peripheral surface of the shaft part or the outer cylinder, and
a Z calibration part which is formed on a tip of the shaft part and which has a plane orthogonal to an axial direction of the shaft part.

2. The calibration device according to claim 1, wherein the outer cylinder includes a magnet at a bottom part thereof, and an inclined surface which is inclined toward an outer peripheral side relative to a radial direction of a bottom surface is formed on a part of the bottom part.

3. The calibration device according to claim 1 or claim 2, wherein the outer cylinder includes a thin-wall cylinder for supporting the shaft part, and the affixation part includes a clamper which releasably exerts a radial pressing force from an outer periphery of the thin-wall cylinder toward the shaft part.

4. The machine tool to which the calibration device according to claim 1 can be attached, the machine tool comprising:
a spindle for attachment of a machining tool, the spindle being capable of attachment of a reference tool and the touch probe in place of the machining tool,
a table to which a machining target and the calibration device are attached, and
a feed shaft part for moving the spindle and the table relative to each other.

5. The machine tool according to claim 4, wherein in a reference tool attached to the spindle, a tip has a spherical shape having the same radius as a spherical part of a gauge head of the touch probe.

6. The machine tool according to claim 4 or claim 5, wherein a reference tool attached to the spindle has a fuse structure which breaks when a predetermined load or greater is exerted thereon.

7. A method for calibrating the touch probe using the calibration device according to claim 1, the method comprising the steps of:
arranging the calibration device on the machine tool,
holding the shaft part in a pressed position by means of the temporary locking mechanism,
attaching a reference tool to a spindle of the machine tool and relatively moving the spindle such that a tip of the reference tool is positioned axially above the Z calibration part of the shaft part,
releasing the temporary locking mechanism and biasing the shaft part toward the reference tool by means of the biasing part,
affixing the shaft part abutting the reference tool with the affixation part,
acquiring reference coordinates in the axial direction of the affixed shaft part,
attaching the touch probe to the spindle of the machine tool,
acquiring reference coordinates in a direction orthogonal to the axial direction of the shaft part, and
acquiring calibration values in the axial direction and a direction orthogonal to the axial direction based on the reference coordinates.
